# EUROPÄISCHE PATENTSCHRIFT

(11) **EP 2 724 001 B1**
(45) Veröffentlichungstag und Bekanntmachung des Hinweises auf die Patenterteilung: **30.09.2015**
(21) Anmeldenummer: 12718671.6
(22) Anmeldetag: 04.05.2012
(51) Int. Cl.: F01P 3/20, F01M 5/00

(54) **KÜHLSYSTEM**
COOLING SYSTEM
SYSTEME DE REFROIDISSEMENT

(30) Priorität: 27.06.2011 DE 102011078088
(43) Veröffentlichungstag der Anmeldung: 30.04.2014
(73) Patentinhaber: ZF Friedrichshafen AG, 88038 Friedrichshafen (DE)
(72) Erfinder: HEINZELMANN, Karl-Fritz, 88074 Meckenbeuren (DE)
(86) Internationale Anmeldenummer: PCT/EP2012/058183
(87) Internationale Veröffentlichungsnummer: WO 2013/000605

(56) Entgegenhaltungen:
- EP-A1- 1 522 689
- DE-A1-102007 052 927
- GB-A- 2 471 514
- US-A1- 2005 139 176
- US-A1- 2010 181 516

## Beschreibung

Die vorliegende Erfindung betrifft ein Kühlsystem für ein Fahrzeug gemäß dem Oberbegriff des Anspruches 1, sowie ein Fahrzeug mit einem derartigen Kühlsystem gemäß Anspruch 8.

Zur Kühlung von Fahrzeuggetrieben sind Systeme bekannt, die einen Getriebekühlkreislauf umfassen, der im Getriebe erzeugte Wärmeenergie über einen Wärmetauscher an einen Kühlwasserkreislauf eines Verbrennungsmotors abführt. Der Kühlwasserkreislauf des Verbrennungsmotors gibt die abzuführende Wärmeenergie in der Regel über einen Wasser-Luft-Kühler an die Umgebung ab. In bestimmten Betriebsphasen steigt die Temperatur in dem Kühlwasserkreislauf des Verbrennungsmotors so stark an, dass über den Wärmetauscher keine Wärmeenergie mehr vom Getriebekühlkreislauf abgegeben werden kann, sondern in entgegen gesetzter Richtung Wärmeenergie in den Getriebekühlkreislauf eingetragen wird, was zu einer unerwünschten Erhöhung der Getriebesumpftemperatur führt. Hohe Temperaturen im Getriebekühlkreislauf führen jedoch zu Lebensdauereinbußen und kürzeren Ölwechselintervallen des Getriebes.

Im Bestreben Verbrennungsmotoren bei geringem Kraftstoffverbrauch und Schadstoffausstoß noch leistungsfähiger zu machen, werden immer höhere Temperaturen im Kühlwasserkreislauf von modernen Verbrennungsmotoren vorgesehen. Dies verschärft die oben beschriebene Problematik bei der Getriebekühlung.

Die Problematik eines an der thermischen Leistungsgrenze arbeitenden Kühlwasserkreislaufs eines Fahrzeugs, der mit einem Getriebekühlkreislauf über einen Wärmetauscher zusammenwirkt, ist in der DE 10 2006 030 791 A1 beschrieben. Darin wird vorgeschlagen, ausgehend von einem gemeinsamen Ölhaushalt für eine Retardertemperierung und eine Getriebetemperierung, wahlweise nur eine der beiden Temperierungen zu betreiben oder beiden Temperierungen abzuschalten. Weiterhin beschreibt US 2005 (0 139 176 A1 eine Anordnung zur kühlung eines Geriebes.

Es ist die Aufgabe der vorliegenden Erfindung ein Kühlsystem für ein Fahrzeug im Bezug auf den Temperaturverlauf in einem Fahrzeuggetriebe zu verbessern.

Die genannten Aufgaben werden durch ein Kühlsystem gemäß Patentanspruch 1 und durch ein Fahrzeug gemäß Patentanspruch 8 gelöst. Die jeweiligen abhängigen Ansprüche beinhalten bevorzugte Weiterbildungen der Erfindung.

Das erfindungsgemäße Kühlsystem umfasst einem Getriebekühlkreislauf, der die im Getriebe erzeugte Wärmeenergie über einen Wärmetauscher an einen Kühlwasserkreislauf eines Verbrennungsmotors abführt. Der Getriebekühlkreislauf umfasst seinerseits eine Bypassleitung zur Überbrückung des Wärmetauschers und ein Steuerelement. Die Aufteilung des Volumenstroms durch die Bypassleitung und den Wärmetauscher ist durch das Steuerelement steuerbar. Der Volumenstrom im Getriebekühlkreislauf kann also durch das Steuerelement teilweise oder vollständig durch die Bypassleitung geführt werden, sodass der Wärmetauscher im Getriebekühlkreislauf überbrückt ist. Dabei wird das Steuerelement abhängig von der Temperatur in dem Kühlwasserkreislauf angesteuert.

Indem nicht die Temperatur im Getriebekühlkreislauf, sondern die Temperatur in dem Kühlwasserkreislauf des Fahrzeuges zur Ansteuerung des Steuerelementes für die Bypassleitung erfasst wird, kann verhindert werden, dass in Betriebsphasen, in denen die Temperatur in dem Kühlwasserkreislauf des Verbrennungsmotors über einen vorgebbaren Grenzwert steigt, über den Wärmetauscher Wärmeenergie von dem Kühlwasserkreislauf in den Getriebekühlkreislauf übertragen wird. So kann eine unerwünschte Erhöhung der Getriebetemperatur in diesen Betriebsphasen verhindert werden.

Ein Kühlwasserkreislauf ist in Rahmen dieser Erfindung ein Kühlkreislauf eines Verbrennungsmotors zu verstehen, der mit einem flüssigen Medium betrieben werden kann. Dieses Medium ist nicht zwangsläufig nur Wasser. So ist es beispielsweise üblich derartige Kühlkreisläufe mit Mischungen aus Wasser, Frostschutzmittel und/oder Korrosionsschutzmittel zu betreiben.

Bevorzugt ist das Kühlsystem derart ausgeführt, dass der Wärmetauscher überbrückt wird, solange die Temperatur in dem Kühlwasserkreislauf des Fahrzeuges oberhalb einer vorgegebenen Solltemperatur des Getriebekühlkreislaufs liegt.

Als Steuerelement wird vorzugsweise ein Thermostat in den Getriebekühlkreislauf eingesetzt, auf den die Temperatur in dem Kühlwasserkreislauf einwirkt. Der Thermostat regelt so den Volumenstrom durch die Bypassleitung in dem Getriebekühlkreislauf abhängig von der Temperatur im Kühlwasserkreislauf. Diese Ausführungsform ist einfach und günstig im Vergleich zu der nachfolgend erläuterten Ausführungsform, weil hier kein Signal- bzw. Datenaustausch mit einer separaten Steuereinheit notwendig ist.

Zusätzlich kann bei dieser Ausführungsform auch ein Temperatursensor im Getriebekühlkreislauf angeordnet werden, wobei die erfasste Getriebeöltemperatur von dem Thermostat zusätzlich berücksichtigt wird zur Steuerung des Volumenstroms durch die Bypassleitung bzw. durch den Wärmetauscher. Dabei kann die Temperatur im Getriebekühlkreislauf an verschiedenen Stellen erfasst werden, beispielsweise im Ölsumpf des Getriebes.

Demgegenüber ist es auch möglich, als Steuerelement ein Steuerventil einzusetzen, welches von einer elektronischen Steuereinheit ansteuerbar ist, abhängig von Signalen eines in dem Kühlwasserkreislauf angeordneten Temperatursensors. Der Temperatursensor erfasst die Temperatur im Kühlwasserkreislauf und leitet entsprechende Signale an die Steuereinheit weiter. Die Steuereinheit regelt also auf der Basis der Temperatur im Kühlwasserkreislauf über das Steuerventil den Volumenstrom durch die Bypassleitung und den Wärmetauscher im Getriebekühlkreislauf.

Diese Ausführungsform ermöglicht eine so genannte "intelligente" Regelung der Getriebekühlung, welche die Volumenströme durch den Wärmetauscher und die Bypassleitung variabel einstellen kann, abhängig von der Kühlwassertemperatur und optional auch zusätzlichen weiteren Regelgrößen. Vorzugsweise ist zusätzlich ein Öltemperatursensor in dem Getriebekühlkreislauf angeordnet, dessen Signale ebenfalls an die elektronische Steuereinheit geleitet und von dieser zur Ansteuerung des Steuerventils verwendet werden. In dieser Ausgestaltung des Kühlsystems ist es beispielsweise möglich auch die Temperaturdifferenz zwischen dem Kühlwasserkreislauf und dem Getriebekühlkreislauf bei der Regelung des Steuerventils zu berücksichtigen. Des Weiteren kann der Ölstrom in einem derartigen Kühlsystem immer durch den Wärmetauscher geführt werden, solange die Temperatur im Getriebekühlkreislauf unterhalb eines vorgebbaren Grenzwertes liegt. Auf diese Weise kann auch im Falle einer Überhitzung des Kühlwasserkreislaufs gezielt Wärmeenergie an den Getriebekühlkreislauf abgegeben werden, bis dieser einen vorgebbaren maximalen Grenzwert erreicht. Dann wird der Ölstrom wieder durch die Bypassleitung geführt.

Die elektronische Steuereinheit kann beispielsweise eine Getriebesteuereinheit oder eine zentrale Steuereinheit des Fahrzeuges sein. Die Steuereinheit kann zur Regelung der Temperatur im Getriebe auch Signale von weiteren Sensoren und Daten von anderen Steuereinheiten des Fahrzeuges verarbeiten. Ebenso ist es möglich, dass die Steuereinheit derart ausgeführt ist, dass sie neben dem genannten Steuerventil auch auf andere Komponenten des Fahrzeuges einwirkt. So kann eine "intelligente" Regelung der Getriebekühlung auch Eingriffe in die Schaltstrategie umfassen, die beispielsweise in temperaturkritischen Betriebsphasen die Anzahl an Wärme erzeugenden Schaltungen im Getriebe reduziert oder Übersetzungen, die verhältnismäßig viel Reibung im Getriebe verursachen, wenn möglich vermeidet.

Das jeweilige Steuerelement kann in dem Getriebekühlkreislauf vor oder hinter dem Wärmetauscher angeordnet werden, um den Volumenstrom des Kühlmediums zwischen dem Wärmetauscher und der Bypassleitung umzuschalten bzw. aufzuteilen.

Gemäß einer weiteren bevorzugten Ausführung kann das Kühlsystem für besonders temperaturkritische Anwendungen zusätzlich einen Öl-Luft-Kühler in dem Getriebekühlkreislauf aufweisen. Auch der Öl-Luft-Kühler kann eine Bypassleitung aufweisen, so dass der Öl-Luft-Kühler abhängig von verschiedenen Betriebsparametern dem Getriebekühlkreislauf zugeschaltet oder davon abgeschnitten ist. Beispielsweise wird ein zusätzlicher Öl-Luft-Kühler in der Aufwärmphase des Fahrzeuges nicht vom Getriebeöl durchströmt werden, um das Getriebeöl und das Getriebe möglichst schnell auf eine optimale Betriebstemperatur zu bringen.

Der Getriebekühlkreislauf kann beispielsweise mit dem Getriebeöl betrieben werden, das auch zum Schalten von Getriebeelementen und/oder zur Schmierung der Lagerstellen im Getriebe verwendet wird.

Schließlich umfasst die Erfindung ein Fahrzeug mit einem Kühlsystem mit einem oder mehreren der oben erläuterten Merkmale.

Im Folgenden ist die Erfindung anhand der nachfolgenden Figuren näher erläutert. Dabei zeigen
Fig. 1 ein erstes erfindungsgemäßes Kühlsystem in einer schematischen Darstellung und
Fig. 2 ein zweites erfindungsgemäßes Kühlsystem in einer schematischen Darstellung.

Das Getriebeöl wird von einer Getriebeölpumpe 11 aus dem Ölsumpf 12 eines Getriebes 3 angesaugt und durch den Getriebekühlkreislauf 1 gefördert. Der Getriebekühlkreislauf 1 umfasst einen Wärmetauscher 5, mit dessen Hilfe Wärmeenergie, die im Getriebe 3 entstanden ist, auf den Kühlwasserkreislauf 2 eines Verbrennungsmotors 4 übertragbar ist. Vom Kühlwasserkreislauf 2 wird die Wärmeenergie aus dem Getriebe 3 und dem Verbrennungsmotor 4 über einen Fahrzeugkühler 13 an die Umgebungsluft abgegeben.

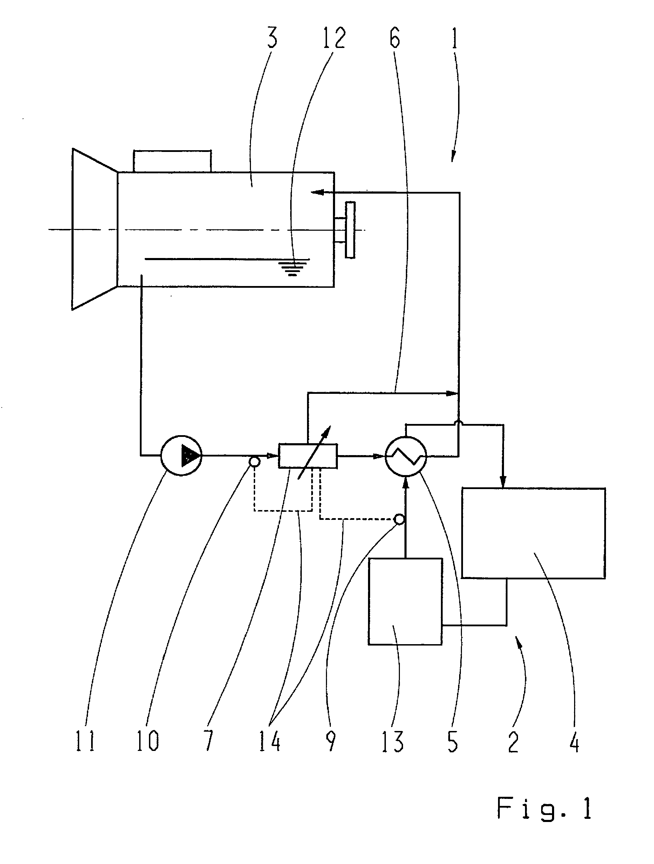

In dem Getriebekühlkreislauf 1 gemäß Fig. 1 ist zwischen der Getriebeölpumpe 11 und dem Wärmetauscher 5 ein Steuerelement 7 in Form eines Thermostats angeordnet. Von den beiden Ausgangsleitungen des Thermostats 7 ist eine mit der Eingangsseite des Wärmetauschers 5 und die andere mit der Ausgangsseite des Wärmetauschers 5 verbunden, sodass der Getriebeölstrom im Getriebekühlkreislauf 1 entweder durch den Wärmetauscher 5 oder durch eine Bypassleitung 6 geführt wird. Von der Ausgangsseite des Wärmetauschers 5 wird das Getriebeöl den Schmierstellen und/oder den Schaltelementen des Getriebes 3 zugeführt. Von dort aus fließt es in den Ölsumpf 12 im Getriebe 3 zurück. Zusätzlich kann der Getriebekühlkreislauf 1 optional einen Öltemperatursensor 10 aufweisen, der über eine Signalleitung 14 mit dem Thermostaten 7 verbunden ist, sodass der Thermostat 7 zur Regelung der Ölströme durch den Wärmetauscher 5 und die Bypassleitung 6 neben der Kühlwassertemperatur im Kühlwasserkreislauf 2 auch die Öltemperatur im Getriebekühlkreislauf 1 berücksichtigt.

Von dem Kühlwasserkreislauf 2 sind neben den Verbindungsleitungen und dem Wärmetauscher 5 der Verbrennungsmotor 4 und der Fahrzeugkühler 13 dargestellt, durch die das Kühlwasser geleitet wird. Des Weiteren ist ein Temperatursensor 9 dargestellt, der die Temperatur des Kühlwassers im Kühlwasserkreislauf erfasst und entsprechende Signale bzw. Daten über eine signalübertragende Signalleitung 14 an den Thermostaten 7 weiterleitet. Es ist jedoch auch möglich auf separate Signalleitungen zu verzichten und das Kühlwasser direkt mit einem Stellglied des Thermostaten 7 in Verbindung zu bringen, sodass der Thermostat abhängig von der Kühlwassertemperatur den Getriebeölstrom durch den Wärmetauscher 5 und/oder die Bypassleitung 6 einstellt.

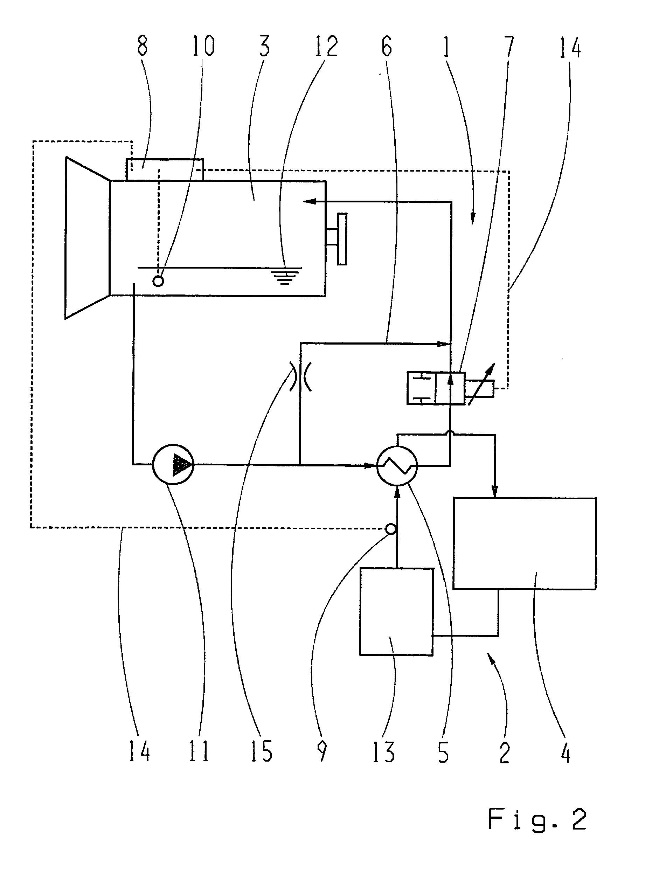

Signalübertragende Leitungen sind in Fig. 1 und Fig. 2 als Strichlinien dargestellt. Weitere Einzelheiten des Kühlwasserkreislaufes, wie beispielsweise eine Kühlwasserpumpe und Steuer- und Regelkomponenten, sind aus dem Stand der Technik hinreichend bekannt und nicht dargestellt.

Im Betrieb regelt der Thermostat 7 den Ölstrom durch den Wärmetauscher 5 und durch die Bypassleitung 6 abhängig von der Temperatur im Kühlwasserkreislauf 2. Im Normalbetrieb ist die Temperatur im Kühlwasserkreislauf 2 niedriger als die Temperatur im Getriebekühlkreislauf 1. Der Thermostat 7 leitet den Ölstrom vollständig oder zumindest teilweise durch den Wärmetauscher 5, sodass im Getriebe 3 entstandene Wärmeenergie vom Getriebekühlkreislauf 1 über den Wärmetauscher 5 an den Kühlwasserkreislauf 2 abgeführt wird.

Steigt die Temperatur im Kühlwasserkreislauf 2 über einen vorgegebenen Wert an, der beispielsweise einer idealen Betriebstemperatur des Getriebes 3 entspricht, so schaltet der Thermostat 7 den Ölstrom im Getriebekühlkreislauf 1 durch den Wärmetauscher vollständig ab, sodass das gesamte Getriebeöl durch die Bypassleitung 6 gefördert wird. Auf diese Weise wird verhindert, dass das Getriebeöl im Wärmetauscher 5 von dem Kühlwasserkreislauf 2 aufgeheizt wird.

Durch die zusätzliche Verwendung eines Öltemperatursensors 10 kann der Ölstrom durch die Bypassleitung 6 und den Wärmetauscher 5 auch abhängig von der Temperaturdifferenz zwischen Öltemperatur im Getriebekreislauf 1 und Wassertemperatur im Kühlwasserkreislauf 2 eingestellt werden. In diesem Fall weist der Thermostat ein Stellglied auf, das auf diese Temperaturdifferenz reagiert und den Ölstrom entsprechend einstellt. So kann beispielsweise immer dann, wenn die Öl-temperatur höher ist als die Kühlwassertemperatur der gesamte Ölstrom durch den Wärmetauscher 5 geleitet werden und bei umgekehrtem Temperaturverhältnis wird der gesamte Ölstrom durch die Bypassleitung 6 geleitet.

Eine noch umfassendere Regelung der Temperatur im Getriebekühlkreislauf 1 ist durch die in Fig. 2 dargestellt Ausführung der Erfindung möglich. Dabei umfasst der Kühlwasserkreislauf 2 die gleichen Komponenten, wie zu Fig. 1 erläutert. Der Getriebekühlkreislauf unterscheidet sich im Wesentlichen durch das Steuerelement 7, welches gemäß Fig. 2 als Steuerventil 7 ausgeführt ist und eine Drossel 15, die in der Bypassleitung 6 angeordnet ist.

Das Steuerventil 7 ist auf der Ausgangsseite des Wärmetauschers 5 angeordnet und ist beispielsweise elektromagnetisch betätigbar. Das Steuerventil 7 wird von einer elektronischen Steuereinheit 8, in diesem Fall von der Getriebesteuerung, angesteuert. Das Steuerventil ist in der dargestellten Ausführung als einfaches Abschaltventil in Form eines 2/2-Wegeventils ausgeführt, sodass die Ausgangsseite des Wärmetauschers 5 entweder gesperrt oder offen ist. Ist die Ausgangsseite des Wärmetauschers 5 durch das Steuerventil 7 gesperrt, so fließt der gesamte Ölstrom des Getriebekühlkreislaufs 1 durch die Bypassleitung 6. Steht das Steuerventil 7 in der offenen Stellung, so fließt der Ölstrom zumindest teilweise durch den Wärmetauscher 5. Bei offenem Steuerventil 7 hängt es von der Stärke einer Drossel 15 in der Bypassleitung 6 ab, ob der gesamte Ölstrom durch den Wärmetauscher geleitet wird oder nur ein Teil davon.

Die Steuereinheit 8 erhält von dem Temperatursensor 9 über eine Signalleitung 14 Signale bzw. Daten über die Temperatur im Kühlwasserkreislauf 2. Die Steuereinheit 8 ist derart ausgeführt, dass sie das Steuerventil 7 abhängig von der vom Temperatursensor 9 erfassten Kühlwassertemperatur ansteuern kann. Zusätzlich können von der Steuereinheit 8 weitere Daten und Informationen beispielsweise die Getriebeöltemperatur verarbeitet und bei der Ansteuerung des Steuerventils 7 berücksichtigt werden. Dadurch ist es auch mit dieser Ausführung möglich, den Öl-strom im Getriebekühlkreislauf 1 abhängig von der Temperaturdifferenz zwischen Kühlwasserkreislauf 2 und Getriebekühlkreislauf 1 zu regeln.

Im Rahmen der vorliegenden Erfindung ist es auch möglich, die Temperatur im Getriebekühlkreislauf 1 zu regeln, indem anstatt der Drossel 15 auch in der Bypassleitung 6 ein von der Steuereinheit 8 ansteuerbares zweites Steuerventil vorgesehen wird.

Eine weitere Möglichkeit zur Regelung des Getriebekühlkreislaufes 1 besteht in einer Anordnung mit einem von der Steuereinheit 8 ansteuerbaren Stellelement an der Abzweigung der Bypassleitung 11 von der Leitung zwischen Getriebeölpumpe 11 und Wärmetauscher 5. Dabei kann das Stellelement den Ölstrom im Getriebekühlkreislauf kontinuierlich umsteuern, vom gesamten Ölstrom durch den Wärmetauscher 5 bis zum gesamten Ölstrom durch die Bypassleitung 6. Ein derartiges Stellelement kann auch ausgangsseitig des Wärmetauschers 5 angeordnet werden, dort wo die Bypassleitung 6 in die Leitung zwischen Wärmetauscher 5 und Getriebe 3 einmündet. Mit einem derartigen ansteuerbaren Stellelement kann auf die beschriebene Drossel 15 verzichtet werden.

### Bezugszeichen

- 1: Getriebekühlkreislauf
- 2: Kühlwasserkreislauf
- 3: Getriebe
- 4: Verbrennungsmotor
- 5: Wärmetauscher
- 6: Bypassleitung
- 7: Steuerelement
- 8: Steuereinheit
- 9: Temperatursensor
- 10: Öltemperatursensor
- 11: Getriebeölpumpe
- 12: Ölsumpf
- 13: Fahrzeugkühler
- 14: Signalleitungen
- 15: Drossel

## Patentansprüche

1. Kühlsystem für ein Fahrzeug mit einem Getriebekühlkreislauf (1), der die im Getriebe (3) erzeugte Wärmeenergie über einen Wärmetauscher (5) an einen Kühlwasserkreislauf (2) eines Verbrennungsmotors (4) abführt, **dadurch gekennzeichnet, dass** der Getriebekühlkreislauf (1) eine Bypassleitung (6) zur Überbrückung des Wärmetauschers (5) und ein Steuerelement (7) umfasst, wobei die Aufteilung des Volumenstrom durch die Bypassleitung (6) und den Wärmetauscher (5) durch das Steuerelement (7) steuerbar ist, und dass das Steuerelement (7) abhängig von der Temperatur in dem Kühlwasserkreislauf (2) ansteuerbar ist.

2. Kühlsystem nach Anspruch 1, **dadurch gekennzeichnet, dass** das Kühlsystem derart ausgeführt ist, dass der Wärmetauscher (5) überbrückt wird, solange die Temperatur in dem Kühlwasserkreislauf (2) des Fahrzeuges oberhalb einer vorgegebenen Solltemperatur des Getriebekühlkreislaufs (1) liegt.

3. Kühlsystem nach Anspruch 1 oder 2, **dadurch gekennzeichnet, dass** das Steuerelement (7) ein Thermostat ist, auf den die Temperatur in dem Kühlwasserkreislauf (2) einwirkt.

4. Kühlsystem nach Anspruch 1 oder 2, **dadurch gekennzeichnet, dass** das Steuerelement ein Steuerventil (7) ist, welches von einer elektronischen Steuereinheit (8) abhängig von Signalen eines in dem Kühlwasserkreislauf (2) angeordneten Temperatursensors (9) ansteuerbar ist.

5. Kühlsystem nach Anspruch 4, **dadurch gekennzeichnet, dass** ein Öltemperatursensor (10) in dem Getriebekühlkreislauf (1) angeordnet ist, dessen Signale ebenfalls an die elektronische Steuereinheit (8) geleitet und von dieser zur Steuerung des Steuerventils (7) verwendet werden.

6. Kühlsystem nach Anspruch 4 oder 5, **dadurch gekennzeichnet, dass** die Steuereinheit (8) derart ausgeführt ist, dass sie neben dem genannten Steuerventil (7) auch auf andere Komponenten des Kühlsystems und/oder des Fahrzeuges einwirken kann.

7. Kühlsystem nach einem der vorgenannten Ansprüche, **dadurch gekennzeichnet, dass** der Getriebekühlkreislauf (1) zusätzlich einen Öl-Luft-Kühler aufweist.

8. Fahrzeug mit einem Kühlsystem gemäß einem der vorgenannten Ansprüche.

## Claims

1. Cooling system for a vehicle having a gearbox cooling circuit (1) which conducts away the thermal energy generated in the gearbox (3) to a cooling water circuit (2) of an internal combustion engine (4) via a heat exchanger (5), **characterized in that** the gearbox cooling circuit (1) comprises a bypass line (6) for bypassing the heat exchanger (5) and a control element (7), wherein the division of the volume flow by the bypass line (6) and the heat exchanger (5) can be controlled by means of the control element (7), and **in that** the control element (7) can be actuated as a function of the temperature in the cooling water circuit (2).

2. Cooling system according to Claim 1, **characterized in that** the cooling system is embodied in such a way that the heat exchanger (5) is bypassed as long as the temperature in the cooling water circuit (2) of the vehicle is above a predefined set point temperature of the gearbox cooling circuit (1).

3. Cooling system according to Claim 1 or 2, **characterized in that** the control element (7) is a thermostat on which the temperature in the cooling water circuit (2) acts.

4. Cooling system according to Claim 1 or 2, **characterized in that** the control element is a control valve (7) which can be actuated by an electronic control unit (8) as a function of signals of a temperature sensor (9) arranged in the cooling water circuit (2).

5. Cooling system according to Claim 4, **characterized in that** an oil temperature sensor (10) is arranged in the gearbox cooling circuit (1), the signals of which oil temperature sensor (10) are also conducted to the electronic control unit (8) and are used thereby to control the control valve (7).

6. Cooling system according to Claim 4 or 5, **characterized in that** the control unit (8) is embodied in such a way that, in addition to the specified control valve (7), it can also act on other components of the cooling system and/or of the vehicle.

7. Cooling system according to one of the preceding claims, **characterized in that** the gearbox cooling circuit (1) additionally has an oil/air radiator.

8. Vehicle having a cooling system according to one of the preceding claims.

## Revendications

1. Système de refroidissement pour un véhicule, comprenant un circuit de refroidissement de transmission (1) qui évacue l'énergie thermique générée dans la transmission (3) par le biais d'un échangeur de chaleur (5) à un circuit de refroidissement (2) d'un moteur à combustion (4), **caractérisé en ce que** le circuit de refroidissement de transmission (1) comprend une conduite de dérivation (6) pour contourner l'échangeur de chaleur (5) et un élément de commande (7), la division du courant volumique par la conduite de dérivation (6) et l'échangeur de chaleur (5) pouvant être commandée par l'élément de commande (7) et l'élément de commande (7) pouvant être commandé en fonction de la température dans le circuit d'eau de refroidissement (2).

2. Système de refroidissement selon la revendication 1, **caractérisé en ce que** le système de refroidissement est réalisé de telle sorte que l'échangeur de chaleur (5) soit contourné tant que la température dans le circuit de refroidissement (2) du véhicule se situe au-dessus d'une température de consigne prédéfinie du circuit de refroidissement de transmission (1).

3. Système de refroidissement selon la revendication 1 ou 2, **caractérisé en ce que** l'élément de commande (7) est un thermostat, sur lequel agit la température dans le circuit d'eau de refroidissement (2).

4. Système de refroidissement selon la revendication 1 ou 2, **caractérisé en ce que** l'élément de commande est une soupape de commande (7) qui peut être commandée par une unité de commande électronique (8) en fonction de signaux d'un capteur de température (9) disposé dans le circuit d'eau de refroidissement (2).

5. Système de refroidissement selon la revendication 4, **caractérisé en ce qu'**un capteur de température d'huile (10) est disposé dans le circuit de refroidissement de transmission (1), dont les signaux sont également conduits à l'unité de commande électronique (8) et sont utilisés par celle-ci pour la commande de la soupape de commande (7).

6. Système de refroidissement selon la revendication 4 ou 5, **caractérisé en ce que** l'unité de commande (8) est réalisée de telle sorte qu'elle puisse agir non seulement sur ladite soupape de commande (7) mais également sur d'autres composants du système de refroidissement et/ou du véhicule.

7. Système de refroidissement selon l'une quelconque des revendications précédentes, **caractérisé en ce que** le circuit de refroidissement de transmission (1) présente en outre un refroidisseur huile-air.

8. Véhicule comprenant un système de refroidissement selon l'une quelconque des revendications précédentes.
